**Europäisches Patentamt**

**European Patent Office**

**Office européen des brevets**

(19)

(11) Veröffentlichungsnummer : **0 379 027 B1**

(12)

# EUROPÄISCHE PATENTSCHRIFT

(45) Veröffentlichungstag der Patentschrift :
**25.03.92 Patentblatt 92/13**

(51) Int. Cl.$^5$ : **B65G 43/02**

(21) Anmeldenummer : **90100324.4**

(22) Anmeldetag : **09.01.90**

(54) **Bandförderer mit Längsrissüberwachungseinrichtung.**

(30) Priorität : **14.01.89 DE 8900370 U**

(43) Veröffentlichungstag der Anmeldung :
**25.07.90 Patentblatt 90/30**

(45) Bekanntmachung des Hinweises auf die
Patenterteilung :
**25.03.92 Patentblatt 92/13**

(84) Benannte Vertragsstaaten :
**AT BE CH DE DK ES FR GB GR IT LI LU NL SE**

(56) Entgegenhaltungen :
**DD-A- 91 443**
**DD-A- 211 533**
**DE-A- 2 535 525**
**US-A- 4 462 523**

(73) Patentinhaber : **Kiepe Elektrik GmbH**
**Thorner Strasse 1**
**W-4000 Düsseldorf (DE)**

(72) Erfinder : **Rohloff, Joachim**
**Am Bandsbusch 10**
**W-4010 Hilden (DE)**

(74) Vertreter : **Feder, Wolf-Dietrich et al**
**Dr. Wolf-D. Feder, Dr. Heinz Feder Dipl.-Ing.**
**P.-C. Sroka Dominikanerstrasse 37**
**W-4000 Düsseldorf 11 (DE)**

EP 0 379 027 B1

Jouve, 18, rue Saint-Denis, 75001 PARIS

**Beschreibung**

Die Erfindung betrifft einen Bandförderer mit einem Grundgestell, in dem ein endloser Fördergurt um eine durch einen Elektromotor antreibbare Antriebstrommel und eine Umlenktrommel geführt ist und mit einer am Grundgestell angeordneten Längsrißüberwachungseinrichtung für den Fördergurt, wobei die Längsrißüberwachungseinrichtung mindestens ein in Querrichtung zum Fördergurt angeordnetes Auslöseseil aufweist, dessen eines Ende fest mit dem Grundgestell verbunden ist, während das andere Ende über eine unter Zugkraft lösbare Verbindungsvorrichtung mit einer am Grundgestell angeordneten elektrischen Schaltvorrichtung zur Abschaltung des Bandantriebs verbunden ist.

Bei Bandförderern entstehen häufig durch mechanische Einwirkung und Verschleiß der Oberseite des Fördergurtes Beschädigungen. Beschädigungen durch mechanische Einwirkung, beispielsweise durch Fremdkörper im Schüttgut, äußern sich in Aufspleißungen an der Seite des Fördergurtes, welche der Antriebs- bzw. Umlenktrommel zugewandt ist, also der Innenseite des Fördergurtes. Beschädigungen durch Verschleiß äußern sich in Aufspleißungen, die an der Außenseite des Fördergurtes auftreten. Diese Aufspleißungen führen in der Regel zu Längsrissen des Fördergurtes mit der Folge, daß der Fördergurt repariert werden muß. Aus diesem Grunde weisen Bandförderer der oben beschriebenen Bauart eine Längsrißüberwachungsein-richtung mit den angegebenen Merkmalen auf, durch die größere Schäden am Fördergurt und damit längere Betriebsstillstandszeiten verhindert werden sollen. Kommt es zu Beschädigungen des Fördergurtes und somit zum Aufspleißen der Oberfläche, so verfangen sich abstehende Bandteile in dem Auslöseseil bzw. den Auslöseseilen, was dazu führt, daß durch die elektrische Schaltvorrichtung eine Abschaltung des Bandantriebes erfolgt. Die Längsrißüberwachungseinrichtung soll so ausgebildet sein, daß sie nicht nur allmählich eintretenden Verschleiß, sondern vor allen Dingen abrupt auftretende Beschädigung feststellt, und zwar so rasch, daß eine Anlage angehalten werden kann, ehe ein gegebenenfalls verursachender Fremdkörper auf einen weiteren Bandförderer gerät und dort erneut Schaden anrichtet. In diesem Fall ist es zweckmäßig, beide Seiten des Fördergurtes zu überwachen, was dadurch geschehen kann, daß die Längsrißüberwachungseinrichtung mindestens zwei Auslöseseile aufweist, von denen eines unterhalb des Obergurtes und eines unterhalb des Untergurtes angeordnet ist.

Bei einem bekannten Bandförderer (US-A- 4 462 523) ist die elektrische Schaltvorrichtung als Mikroschalter ausgebildet,und die lösbare Verbindungsvorrichtung besteht aus einer am Ende des Auslöseseils angeordneten Kugel, die in einem mit dem Mikroschalter verbundenen Sockel unter Federkraft festgehalten ist. Durch die von einem aufgespleißten Gurtteil auf das Auslöseseil ausgeübte Zugkraft wird die Kugel aus dem Sockel herausgezogen und dadurch ein unter Federkraft stehendes Auslöseelement des Mikroschalters freigegeben, wodurch der beschriebene Schaltvorgang ausgelöst wird.

Der vorliegenden Erfindung liegt die Aufgabe zugrunde, die Längsrißüberwachungseinrichtung bei einem Bandförderer der oben erwähnten Bauart so auszubilden, daß sie konstruktiv vereinfacht und leicht zu bedienen ist und zudem weniger verschleißanfällig, in der Funktion zuverlässiger und unempfindlicher gegen äußere Einflüsse, z.B. Witterungseinflüsse, ist als die bekannte Einrichtung.

Die Lösung dieser Aufgabe erfolgt erfindungsgemäß dadurch, daß die elektrische Schaltvorrichtung ein berührungsloser Schalter ist und die Verbindungsvorrichtung ein über das Sensorteil des Schalters gestülptes abziehbares kappenartiges Formteil aus flexiblem Material aufweist, das ein Betätigungselement für den berührungslosen Schalter enthält und an dem anderen Ende des Auslöseseils befestigt ist.

Dabei kann der berührungslose Schalter ein Magnetschalter sein, und in diesem Falle ist das Betätigungselement ein im Formteil angeordneter Permanentmagnet.

Der berührungslose Schalter kann aber auch als induktiver Näherungsschalter ausgebildet sein, wobei das Betätigungselement ein metallisches Bedämpfungselement enthält.

Die Längsrißüberwachungseinrichtung kann sowohl unterhalb des Untergurtes als auch unterhalb des Obergurtes des Fördergurtes angeordnet sein, und zwar möglichst in der Nähe der Antriebstrommel. Zur besseren Anpassung an die Kontur des Fördergurtes hat es sich bei Obergurten mit wannenförmiger Kontur als vorteilhaft erwiesen, wenn die Längsrißüberwachungseinrichtung zwei Auslöseseile aufweist, die vorzugsweise so unterhalb des Obergurtes des Fördergurtes angeordnet sind, daß sie an der dem Fördergurt zugewandten Seite einen stumpfen Winkel miteinander einschließen.

In einfachen Fällen ist es aber auch möglich, die Längsrißüberwachungseinrichtung nur mit einem Auslöseseil auszurüsten.

Im folgenden wird anhand der beigefügten Zeichnungen ein Ausführungsbeispiel für einen Bandförderer gemäß der Erfindung näher erläutert.

In den Zeichnungen zeigen:

Fig. 1 in einer schematisierten Darstellung im Querschnitt den Obergurt eines Förderbandes mit einer Längsrißüberwachungseinrichtung;

Fig. 2 in gegenüber Fig. 1 vergrößerter Darstellung die Einzelheiten der Längsrißüberwachungseinrichtung nach Fig. 1.

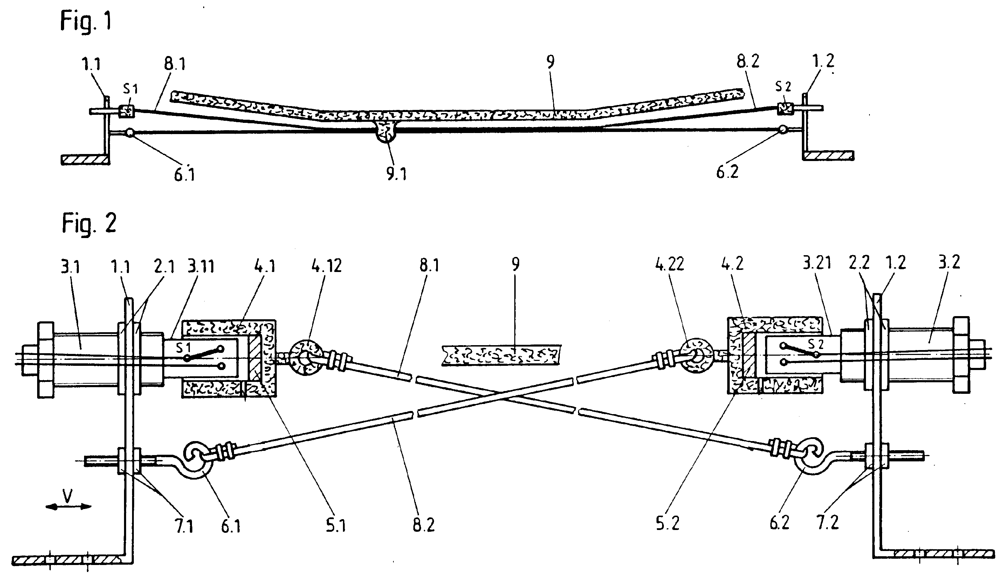

In den Fig. 1 und 2 ist eine an einem Bandförderer angeordnete Längsrißüberwachungseinrichtung dargestellt, wobei vom Bandförderer selbst im wesentlichen nur der Obergurt 9 des Fördergurtes dargestellt ist, unterhalb dessen die Längsrißüberwachungseinrichtung angeordnet ist. Diese ist mittels zweier Befestigungswinkel 1.1 und 1.2 am ansonsten nicht weiter dargestellten Grundgestell des Bandförderers zu beiden Seiten des Obergurtes 9 des Fördergurtes befestigt.

An den Befestigungswinkeln 1.1 und 1.2 ist jeweils ein Magnetschalter 3.1 und 3.2 über Befestigungsmuttern 2.1 und 2.2 angeordnet. Über das nach innen weisende Sensorteil 3.11 bzw. 3.21 der Magnetschalter ist jeweils ein flexibles kappenartiges Formteil 4.1 und 4.2 gestülpt, und zwar so, daß es unter Zugkraft abziehbar ist. Das Material der Formteile 4.1 und 4.2 ist so gewählt, daß die Flexibilität über einen weiten Temperaturbereich erhalten bleibt. Es kann hier beispielsweise Gummi oder Neopren verwendet werden. An den Formteilen 4.1 und 4.2 sind jeweils über Befestigungsvorrichtungen 4.12 bzw. 4.22 das eine Ende zweier Auslöseseile 8.1 und 8.2 befestigt. Die Auslöseseile 8.1 und 8.2 sind als Drahtseile ausgebildet und verlaufen quer zum Obergurt 9 des Fördergurtes unter einem kleinen Winkel gegen die Horizontale. Das jeweils andere Ende der Auslöseseile 8.1 und 8.2 ist fest mit dem jeweils gegenüberliegenden Befestigungswinkel 1.1 bzw. 1.2 verbunden. Die Befestigung erfolgt über Schaukelhaken 6.1 und 6.2, welche mittels Schraubverbindungen 7.1 und 7.2 in Pfeilrichtung V verstellbar an den Befestigungswinkeln 1.1 und 1.2 angeordnet sind. Die Befestigung über Schaukelhaken 6.1 und 6.2 hat den Vorteil, daß die Auslöseseile 8.1 und 8.2 beim Abziehen der Formteile 4.1 und 4.2 nicht verlorengehen.

In den Formteilen 4.1 und 4.2 ist jeweils ein Permanentmagnet 5.1 bzw. 5.2 angeordnet. Hierdurch wird beim Abziehen der Formteile 4.1 und 4.2 das in den Magnetschaltern 3.1 und 3.2 angeordnete Schaltelement S1, S2 betätigt und in nicht weiter dargestellter Weise über ein Hilfsschütz der Antrieb des Bandförderers abgeschaltet. Durch die Anordnung von zwei Auslöseseilen 8.1 und 8.2, die, wie aus Fig. 2 zu entnehmen, gegenüber der Unterseite des Obergurtes 9 des Fördergurtes einen stumpfen Winkel einschließen, ist eine gute Anpassung der Längsrißüberwachungseinrichtung an die Kontur des Fördergurtes möglich und außerdem eine weitgehende Redundanz der Überwachung gewährleistet. Die Auslösung der Einrichtung erfolgt, wie aus Fig. 1 zu entnehmen, durch eine aufgespleißte Stelle 9.1 am Obergurt 9 des Fördergurtes, die nach unten hängt und sich als abstehender Gurtteil in einem der Auslöseseile 8.1 und 8.2 verfängt. Auf diese Weise werden die Zugkräfte ausgeübt, die zum Abziehen eines der Formteile 4.1 und 4.2 vom Sensorteil 3.11 bzw. 3.21 eines der Magnetschalter 3.1 bzw. 3.2 führen.

Nachdem die schadhafte Stelle des Fördergurtes ausgebessert ist, wird das betreffende Formstück 4.1 oder 4.2 wieder über den Magnetschalter gestülpt. Der Permanentmagnet 5.1 bzw. 5.2 schaltet dann über das Schaltelement S1 oder S2 wieder ein, so daß die Anlage wieder betriebsbereit wird.

Die Schalter 3.1 und 3.2 können auch als induktive Näherungsschalter ausgebildet sein. In diesem Fall enthalten die Formteile 4.1 und 4.2 Betätigungselemente 5.1 und 5.2, die ein metallisches Bedämpfungsmaterial enthalten.

**Patentansprüche**

1. Bandförderer mit einem Grundgestell, in dem ein endloser Fördergurt (9) um eine durch einen Motor antreibbare Antriebstrommel und eine Umlenktrommel geführt ist und mit einer am Grundgestell (1.1, 1.2) angeordneten Längsrißüberwachungseinrichtung für den Fördergurt (9), wobei die Längsrißüberwachungseinrichtung mindestens ein in Querrichtung zum Fördergurt (9) angeordnetes Auslöseseil (8.1, 8.2) aufweist, dessen eines Ende fest mit dem Grundgestell (1.1, 1.2) verbunden ist, während das andere Ende über eine unter Zugkraft lösbare Verbindungsvorrichtung mit einer am Grundgestell (1.1, 1.2) angeordneten elektrischen Schaltvorrichtung (S1, S2) zur Abschaltung des Bandantriebs verbunden ist, dadurch gekennzeichnet, daß die elektrische Schaltvorrichtung ein berührungsloser Schalter (3.1, 3.2) ist und die Verbindungsvorrichtung ein über das Sensorteil (3.11, 3.21) des Schalters (3.1, 3.2) gestülptes, abziehbares, kappenartiges Formteil (4.1, 4.2) aus flexiblem Material aufweist, das ein Betätigungselement (5.1, 5.2) für den berührungslosen Schalter (3.1, 3.2) enthält und an dem das andere Ende des Auslöseseils (8.1, 8.2) befestigt ist.

2. Bandförderer nach Anspruch 1, dadurch gekennzeichnet, daß der berührungslose Schalter (3.1, 3.2) ein Magnetschalter ist und das Betätigungselement (5.1, 5.2) ein im Formteil (4.1, 4.2) angeordneter Permanentmagnet ist.

3. Bandförderer nach Anspruch 1, dadurch gekennzeichnet, daß der berührungslose Schalter (3.1, 3.2) ein induktiver Näherungsschalter ist und das Betätigungselement (5.1, 5.2) ein metallisches Bedämpfungsmaterial enthält.

EP 0 379 027 B1

4. Bandförderer nach einem der Ansprüche 1 bis 3, dadurch gekennzeichnet, daß die Längsrißüberwachungseinrichtung unterhalb des Fördergurtes (9) angeordnet ist.

5. Bandförderer nach einem der Ansprüche 1 bis 4, dadurch gekennzeichnet, daß die Längsrißüberwachungseinrichtung zwei Auslöseseile (8.1, 8.2) aufweist, die jeweils an einander gegenüberliegenden Enden fest mit dem Grundgestell (1.1, 1.2) verbunden sind, während die jeweils anderen Enden mit dem berührungslosen Schalter (3.1, 3.2) verbunden sind.

6. Bandförderer nach Anspruch 5, dadurch gekennzeichnet, daß die beiden Auslöseseile (8.1, 8.2) so unterhalb des Fördergurtes (9) angeordnet sind, daß sie an der dem Fördergurt (9) zugewandten Seite einen stumpfen Winkel miteinander einschließen.

7. Bandförderer nach einem der Ansprüche 1 bis 6, dadurch gekennzeichnet, daß die feste Verbindung des einen Endes des Auslöseseils (8.1, 8.2) mit dem Grundgestell (1.1, 1.2) über einen Schaukelhaken (6.1, 6.2) erfolgt.

## Claims

1. Belt conveyor with a basic frame, in which an endless conveyor belt (9) is led around a drive pulley, which can be driven by a motor, and a return pulley, and with a longitudinal rip monitoring device, arranged on the basic frame (1.1, 1.2), for the conveyor belt (9), the longitudinal rip monitoring device having at least one triggering cable (8.1, 8.2), arranged in the transverse direction with respect to the conveyor belt (9), the one end of which cable is firmly connected to the basic frame (1.1, 1.2), whereas the other end is connected via a connecting device, releasable under tensile force, to an electric switching device (S1, S2), arranged on the basic frame (1.1, 1.2), for switching off the belt drive, characterised in that the electric switching device is a contactless switch (3.1, 3.2) and the connecting device has a cap-like shaped part (4.1, 4.2) of flexible material, which is fitted over the sensor part (3.11, 3.21) of the switch (3.1, 3.2), can be pulled off, includes an actuating element (5.1, 5.2) for the contactless switch (3.1, 3.2) and to which the other end of the triggering cable (8.1, 8.2) is fastened.

2. Belt conveyor according to Claim 1, characterised in that the contactless switch (3.1, 3.2) is an electromagnetic switch and the actuating element (5.1, 5.2) is a permanent magnet arranged in the shaped part (4.1, 4.2).

3. Belt conveyor according to Claim 1, characterised in that the contactless switch (3.1, 3.2) is an inductive proximity switch and the actuating element ( 5. 1, 5. 2 ) contains a metallic damping material.

4. Belt conveyor according to one of Claims 1 to 3, characterised in that the longitudinal rip monitoring device is arranged underneath the conveyor belt (9).

5. Belt conveyor according to one of Claims 1 to 4, characterised in that the longitudinal rip monitoring device has two triggering cables (8.1, 8.2), which are in each case firmly connected to the basic frame (1.1, 1.2) at mutually opposite ends, whereas the respective other ends are connected to the contactless switch (3.1, 3.2).

6. Belt conveyor according to Claim 5, characterised in that the two triggering cables (8.1, 8.2) are arranged underneath the conveyor belt (9) in such a way that they form an obtuse angle with each other on the side facing the conveyor belt (9).

7. Belt conveyor according to one of Claims 1 to 6, characterised in that the firm connection of the one end of the triggering cable (8.1, 8.2) to the basic frame (1.1, 1.2) takes place by means of a rocker hook (6.1, 6.2).

## Revendications

1. Transporteur à bande comportant un bâti de base dans lequel un tapis transporteur sans fin (9) passe autour d'un tambour d'entrainement pouvant être actionné et un tambour de renvoi et comportant un dispositif de contrôle des fissures longitudinales dudit tapis (9) disposé sur le bâti de base (1.1, 1.2), ledit dispositif de contrôle des fissures longitudinales présentant au moins un câble de déclenchement (8.1, 8.2) disposé transversalement par rapport au tapis (9) dont une extrémité est reliée de manière fixe au bâti (1.1, 1.2) son autre extrémité étant reliée, par un dispositif d'assemblage pouvant être desserré sous une force de traction, à un dispositif de commutation électrique (S1, S2) disposé sur le bâti (1.1, 1.2) et destiné à interrompre l'entrainement du tapis, caractérisé par le fait que le dispositif commutateur électrique est un interrupteur sans contact (3.1, 3.2) et que le dispositif d'assemblage est muni d'une pièce moulée en matière flexible (4.1, 4.2) en forme de capuchon, démontable, monté sur l'élément sensible (3.11, 3.21) du commutateur (3.1, 3.2), cette pièce moulée contenant un élément d'activation (5.1, 5.2) du commutateur (3.1, 3.2) sans contact et étant fixée sur l'autre extrémité du câble de déclenchement (8.1, 8.2).

2. Transporteur à bande selon la revendication 1, caractérisé par le fait que le commutateur sans contact (3.1, 3.2) est un commutateur magnétique et que l'élément d'activation (5.1, 5.2) est un aimant permanent disposé dans la pièce moulée (4.1, 4.2).

3. Transporteur à bande selon la revendication 1, caractérisé par le fait que le commutateur sans contact (3.1, 3.2) est un commutateur inductif de proximité et que l'élément d'activation (5.1, 5.2) contient un matériau métallique d'amortissement.

4. Transporteur à bande selon l'une des revendications 1 à 3, caractérisé par le fait que le dispositif de contrôle des fissures longitudinales est disposé sous le tapis convoyeur (9).

5. Transporteur à bande selon l'une des revendications 1 à 4, caractérisé par le fait que le dispositif de contrôle des fissures longitudinales présente deux câbles de déclenchemnt (8.1, 8.2) lesquels sont fixés sur le bàti de base (1.1, 1.2) sur leurs extrémités se faisant face mutuellement, tandis que leurs autres extrémités sont reliées au commutateur sans contact (3.1, 3.2).

6. Transporteur à bande selon la revendication 5, caractérisé par le fait que les deux câbles de déclenchement (8.1, 8.2) sont disposés sous le tapis convoyeur (9) de telle sorte qu'ils forment un angle obtus entre eux sur le côté orienté vers ledit tapis (9).

7. Transporteur à bande selon l'une des revendications 1 à 6, caractérisé par le fait que la fixation de l'une des extrémités du câble de déclenchement (8.1, 8.2) sur le bâti de base (1.1, 1.2) s'effectue au moyen d'un crochet en bascule (6.1, 6.2).

**Fig. 1**

**Fig. 2**